# EUROPEAN PATENT APPLICATION

(11) **EP 2 629 387 A1**
(43) Date of publication of application: **21.08.2013**
(21) Application number: 11832356.7
(22) Date of filing: 31.08.2011
(51) Int. Cl.: H02J 7/00, H01M 10/44, H01M 10/48, H02J 7/02, H02J 7/35

(54) **POWER MANAGEMENT SYSTEM**

(30) Priority: 10.02.2011 JP 2011026651; 15.10.2010 JP 2010232980
(71) Applicant: Sanyo Electric Co., Ltd., Osaka 570-8677 (JP)
(72) Inventor: ABE Takayoshi, Moriguchi-shi Osaka 570-8677 (JP); NAKASHIMA Takeshi, Moriguchi-shi Osaka 570-8677 (JP); IKEBE Hayato, Moriguchi-shi Osaka 570-8677 (JP); YAGI Yasuhiro, Moriguchi-shi Osaka 570-8677 (JP)
(74) Representative: Metzler, Volker
(86) International application number: PCT/JP2011/069826
(87) International publication number: WO 2012/049915

(57) **Abstract**

A power management system which carries out charge-discharge control according to lack of storage cell pack characteristic uniformity. A power storage device (14) comprises a power storage unit (16), a power system switching circuit (20), and a power management unit (22). The power management unit (22): acquires charge information (for example, charge rate SOC) on each of a plurality of storage cell packs contained in the power storage unit; compares the size of said charge information according to the minimum and maximum values thereof respectively with an upper bound and a lower bound, and switches a charge switch and a discharge switch of the power system switching circuit (20) ; and transitions the power storage unit (16) between a charge-discharge state, a charge state, and a discharge state.

## Description

### [TECHNICAL FIELD]

The present invention relates to a power management system, in particular to a system which controls charge and discharge of a storage cell.

### [BACKGROUND ART]

In electrical power management, it is preferable to perform power generation and power supply in accordance with electrical power consumption of a load. The Patent Document 1 shown below discloses a power supply system of a network system. The power supply system is configured to include two or more solar power generation power supply systems connected to a communication line and an information source device which measures weather data such as amount of solar radiation and sends the data to the solar power generation power supply systems.

Further, in order to store electrical power generated by solar power generation while handling fluctuating power consumption by a load, an electrical storage device consisting of a lithium ion battery or the like is used. The Patent Document 2 shown below discloses a management device of a lithium ion battery which determines a charge and/or discharge mode of a lithium ion battery based on a measured value of charge and discharge electric current of a lithium battery, a measured value of temperature, and information of power supply from a commercial power supply; and calculates residual capacity of lithium ion battery.

### [PRIOR ART DOCUMENT]

### [Patent Documents]

Patent Document 1: JP 2008-136259 A
Patent Document 2: JP 2006-140094 A

### [DISCLOSURE OF THE INVENTION]

### [Objects to be Achieved by the Invention]

Lithium ion batteries and other secondary batteries used to form an electrical storage device have a unit storage cell, generally called "unit cell", which has terminal voltage of about 1 V to 4 V. The capacity of these cells is relatively small. Therefore, it is necessary to form a storage cell pack including two or more unit cells, and further to form an electrical storage device including two or more of the storage cell packs.

Thus, when using two or more storage cell packs, even in an identical usage environment, dispersion may occur in characteristics among these storage cell packs because individual characteristics of the storage cell packs become significant as charge and discharge cycles are repeated. Therefore, in order to efficiently and safely use storage cells in a power management system, it is necessary to assume that dispersion of characteristics will occur among two or more storage cell packs, and to control charge and discharge by taking account of such characteristics dispersion.

An object of the present invention is to provide a system which can perform charge and discharge control in accordance with characteristics dispersion among storage cell packs.

### [Means for Achieving the Objects]

The present invention provides a power management system controlling charge and discharge of an electrical storage unit which is charged by electrical power from a power source and discharges the stored electrical power to a load, the power management system comprising: a detection unit which detects charge information of each of a plurality of storage cell packs included in the electrical storage unit; and a control unit which performs control in accordance with the detected charge information such that when the detected charge information is between a predetermined lower limit value and an upper limit value, the electrical storage unit is caused to be in a charge/discharge mode in which charging and discharging are both possible, when the detected charge information is less than the lower limit value, the electrical storage unit is caused to transit from the charge/discharge mode to a charge mode in which only charging is possible, and when the detected charge information is over the upper limit value, the electrical storage unit is caused to transit from the charge/discharge mode to a discharge mode in which only discharging is possible, wherein the control unit retrieves a minimum value and a maximum value of the detected charge information of each of the plurality of storage cell packs, and when the retrieved minimum value is less than the lower limit value, the control unit causes the electrical storage unit to transit from the charge/discharge mode to the charge mode, while when the retrieved maximum value is over the upper limit value, the control unit causes the electrical storage unit to transit from the charge/discharge mode to the discharge mode.

In one embodiment according to the present invention, when the detected charge information reaches a first threshold which is higher than the lower limit value, the control unit further causes the electrical storage unit to transit from the charge mode to the charge/discharge mode, while when the detected charge information drops to a second threshold which is lower than the upper limit value, the control unit causes the electrical storage unit to transit from the discharge mode to the charge/discharge mode.

Further, in another embodiment according to the present invention, when the maximum limit value reaches the first threshold, the control unit causes the electrical storage unit to transit from the charge mode to the charge/discharge mode, while when the minimum value reaches the second threshold, the control unit causes the electrical storage unit to transit from the discharge mode to the charge/discharge mode.

Further, in yet another embodiment according to the present invention, when the minimum value reaches the first threshold, the control unit causes the electrical storage unit to transit from the charge mode to the charge/discharge mode, while when the maximum value reaches the second threshold, the control unit causes the electrical storage unit to transit from the discharge mode to the charge/discharge mode.

Further, in yet another embodiment according to the present invention, the control unit further comprises: a power system switch unit including a charge switch connecting between the power source and the electrical storage unit and a discharge switch connecting between the electrical storage unit and the load; a power management unit which controls switching of the charge switch and the discharge switch in accordance with the detected charge information such that the electrical storage unit is controlled to be in the charge/discharge mode by turning ON both of the charge switch and the discharge switch, to be in the charge mode by turning ON only the charge switch, or to be in the discharge mode by turning ON only the discharge switch.

Further, in yet another embodiment according to the present invention, the power source includes an external commercial power supply and a solar power generation system; the solar power generation system and the electrical storage unit are connected via the charge switch and a first selector switch; the external commercial power supply and the electrical storage unit are connected to the load via a second selector switch; in the charge/discharge mode, the power management unit performs control to enable charging by turning ON the charge switch and switching the first selector switch to the electrical storage unit side, and further enables discharging by turning ON the discharge switch and switching the second switch to the electrical storage unit side, in the charge mode, the power management unit performs control to enable charging by turning ON the charge switch and switching the first selector switch to the electrical storage unit side and further by turning OFF the discharge switch and switching the second selector switch to the external commercial power supply side, and in the discharge mode, the power management unit performs control to enable discharging by turning OFF the charge switch and switching the first selector switch to the external commercial power supply side and further by turning ON the discharge switch and switching the second selector switch to the electrical storage unit side.

The present invention is also characterized by a power management system controlling charge and discharge of an electrical storage unit which is charged by electrical power from a power source and discharges the stored electrical power to a load, the power management system comprising: a detection unit which detects charge information of each of a plurality of storage cell packs included in the electrical storage unit; and a control unit which controls the electrical storage unit to be in a charge/discharge mode in which charging and discharging are both possible, a charge mode in which only charging is possible, or a discharge mode in which only discharging is possible, and wherein the control unit selects the charge/discharge mode, the charge mode, or the discharge mode in accordance with the charge information detected by the detection unit, and when a current time is within a predetermined period, the control unit causes the electrical storage unit to be in the charge mode regardless of the charge information of the electrical storage unit.

### [Effects of the Invention]

According to the present invention, it is possible to control charge and discharge of an electrical storage unit by taking account of dispersion among storage cell packs, to effectively store external electrical power while preventing overcharge and overdischarge of storage cell packs, and to supply the electrical power to a load.

Further, according to the present invention, it is possible to stably control a mode transition among charge/discharge mode, charge mode, and discharge mode.

### [BRIEF DESCRIPTION OF THE DRAWINGS]

FIG. 1 shows a basic configuration of a power management system.
FIG. 2 shows an internal configuration of a storage cell pack.
FIG. 3 shows an internal configuration of an electrical storage unit.
FIG. 4 shows a mode transition of the charge and/or discharge modes.
FIG. 5 shows an explanatory drawing of electrical power flow in the charge/discharge mode.
FIG. 6 shows an explanatory drawing of electrical power flow in the charge mode.
FIG. 7 shows an explanatory drawing of electrical power flow in the discharge mode.
FIG. 8 shows a detailed configuration of a power management unit.
FIG. 9 shows an explanatory drawing of mode transition in time sequence.
FIG. 10 shows another detailed configuration of a power management unit.
FIG. 11 shows an explanatory drawing of another mode transition in time sequence.
FIG. 12 shows a flowchart of charge and discharge control.

### [BEST MODE FOR CARRYING OUT THE INVENTION]

Embodiments of the present invention are described below by referring to the drawings.

### 1. System Basic Configuration

First, the basic configuration of a power management system according to an embodiment of the present invention is described.

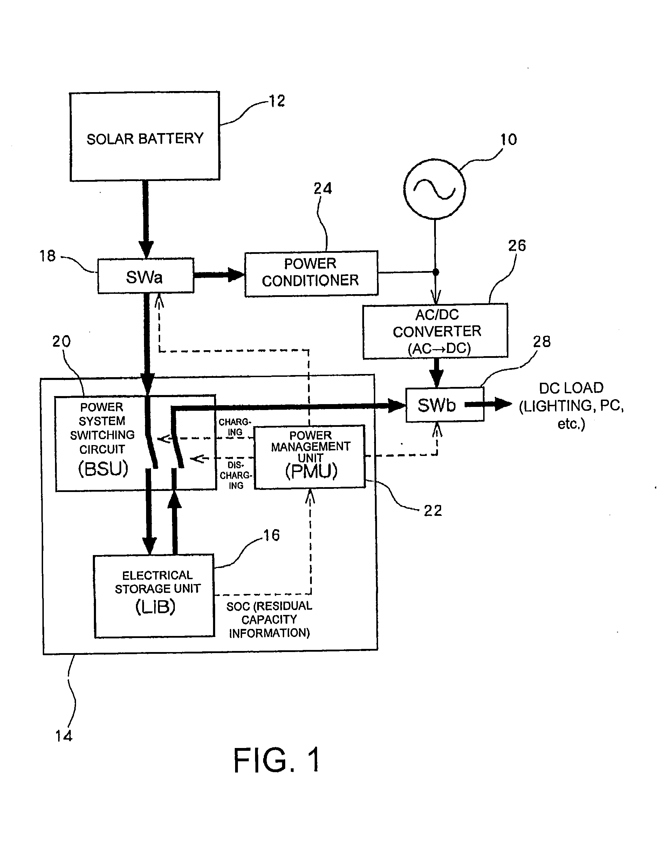

FIG. 1 shows an overall configuration of a power management system according to an embodiment of the present invention. The power management system includes a solar battery (solar power generation system) 12 as a power source in addition to an external commercial power supply 10, an electrical storage device 14, a switch SWa (first selector switch) 18, an SWb (second selector switch) 28, a power conditioner 24, and an AC/DC converter 26.

The electrical storage device 14 includes an electrical storage unit 16, a power system switching circuit 20, and a power management unit 22.

The electrical storage unit 16 is configured to include two or more storage cell packs, each of which is configured to include two or more unit cells. The unit cell is configured to include a lithium ion secondary battery. The configuration of the electrical storage unit 16 is further described below.

The power system switching circuit 20 is a circuit to switch between a connection between the electrical storage device 14 and the solar battery 12 and a connection between the electrical storage device 14 and a load (a DC load which operates in DC power). A switch which connects between the electrical storage device 14 and the solar battery 12 is called a "charge switch", while a switch which connects between the electrical storage device 14 and a load is called a "discharge switch". To charge the electrical storage device 14, the charge switch is turned ON, and the discharge switch is turned OFF. To discharge the electrical storage device 14, the charge switch is turned OFF, and the discharge switch is turned ON. To charge and discharge the electrical storage device 14, the charge switch and the discharge switch are both turned ON. To stop the electrical storage device 14, the charge switch and the discharge switch are both turned OFF. The charge and discharge of the electrical storage device 14 are controlled by an instruction from the power management unit 22.

The power management unit 22reaceives State of charge (SOC) data which indicates charge information from each of storage cell packs included in the electrical storage unit 16. Based on this SOC data, the power management unit 22 outputs an instruction to the power system switching circuit to control the charge and discharge of the electrical storage device 14. At the same time, the power management unit 22 controls ON and OFF of the switch SWa 18 and the switch SWb 28.

The switch SWa 18 is positioned between the solar battery 12, the electrical storage device 14, and the power conditioner 24 to switch between the electrical storage device 14 and the power conditioner 24 to which the electric power from the solar battery 12 is output. To charge the electrical storage device 14, a contact of the switch SWa 18 is connected to the electrical storage device 14 side in accordance with an instruction from the power management unit 22 to supply electrical power from the solar battery 12 to the electrical storage device 14 side. On the other hand, to discharge the electrical storage device 14, the contact of the switch SWa 18 is connected to the power conditioner 24 side in accordance with an instruction from the power management unit 22 to supply electrical power from the solar battery 12 to the power conditioner 24. It should be noted that the switch SWa 18 changes output voltage depending on whether the switch SWa 18 outputs to the electrical storage device 14 or to the power conditioner 24. Voltage to be output to the electrical storage device 14 side is preferably low because safety design becomes more important as the voltage becomes higher. In other words, by setting the voltage to the electrical storage device 14 side lower than the desired input voltage to the power conditioner 24, the charge can be safely performed. Specifically, the switch SWa 18 includes a switch which switches connection configuration (series or parallel) of two or more solar battery modules included in the solar battery 12. To output to the electrical storage device 14 side, the switch SWa 18 outputs voltage by connecting the solar battery modules in parallel, while to output to the power conditioner 24 side, the switch SWa 18 outputs voltage by connecting the solar battery modules in series.

Further, the switch SWb 28 is positioned between the AC/DC converter 26, the electrical storage device 14, and a load. The switch SWb 28 switches between electrical power from the AC/DC converter 26 and electrical power from the electrical storage device 14 to output to a DC load. To discharge the electrical storage device 14, a contact of the switch SWb 28 is connected to the electrical storage device 14 side in accordance with an instruction from the power management unit 22 to supply electrical power from the electrical storage device 14 to the DC load. To charge electrical storage device 14, the contact of the switch SWb 28 is connected to the AC/DC converter 26 side in accordance with an instruction from the power management unit 22 to supply electrical power from the AC/DC converter 26 to the DC load. It should be noted that although not shown, a DC-DC converter is positioned between the switch SWb 28 and the DC load to convert voltage before supplying the voltage to the DC load.

The power conditioner 24 converts DC power from the solar battery 12 to AC power and matches the phase to the phase of external commercial power supply 10 before output. AC power from the power conditioner 24 is supplied to the external commercial power supply 10 side (so called "electrical power selling") or to the DC load (not shown).

The AC/DC converter 26 converts the AC power from the external commercial power supply 10 or the electrical power from the solar battery 12 output from the power conditioner 24 to DC power, and outputs the converted power to the switch SWb 28.

The external commercial power supply 10 is a single-phase or three-phase AC power source supplied from an external electrical power company by combining hydroelectric power generation, thermal power generation, nuclear power, or the like.

The solar battery 12 is a solar power generation system in which two or more solar battery modules are connected and has a power generation capacity of, for example, several tens of kilowatts.

The DC load may be, for example, lighting inside a plant, and office equipment such as servers and PCs.

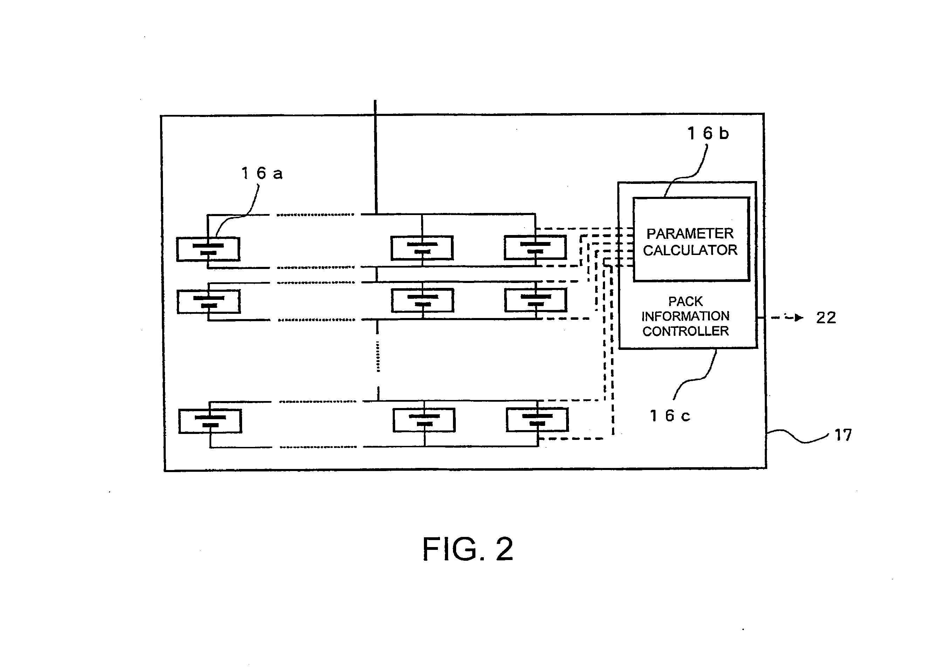

FIG. 2 shows an internal configuration of a storage cell pack 17 included in the electrical storage unit 16. The storage cell pack 17 is configured such that two or more lithium ion unit cells 16a are connected in series and parallel. Specifically, the storage cell pack 17 is configured by connecting, for example, twenty-four electrical storage units 16 in parallel and further connecting them in thirteen stages in series. The storage cell pack 17 is configured to include, in addition to these unit cells, a pack information controller 16c including a parameter calculator 16b.

The parameter calculator 16b measures, in addition to voltage of each stage in which unit cells are connected in parallel, current and voltage between positive (+) and negative (-) electrodes of the storage cell packs; SOC of the storage cell packs; and temperature of each storage cell pack, and outputs the measured values to the pack information controller 16c. It should be noted that the SOC is a parameter expressed as a percentage which shows a ratio of dischargeable capacity (residual capacity) with respect to a fully charged capacity. The SOC can be obtained not only from accumulated values of charged and discharged current flowing to or from the storage cell pack, but also by referring to a calculating formula or table which shows a predetermined relationship between open circuit voltage and SOC of the storage cell pack. Because the storage cell pack has internal resistance, in order to obtain the open circuit voltage of the storage cell pack based on the voltage between the positive (+) and negative (-) electrodes of the storage cell pack, it is necessary to take into account a voltage drop of the storage cell pack due to the above internal resistance when charge and discharge current flows to or from the storage cell pack. Further, because the above internal resistance varies depending on temperature and usage frequency, more accurate SOC can be obtained by including temperature and usage frequency as a parameter in the above calculating formula or table.

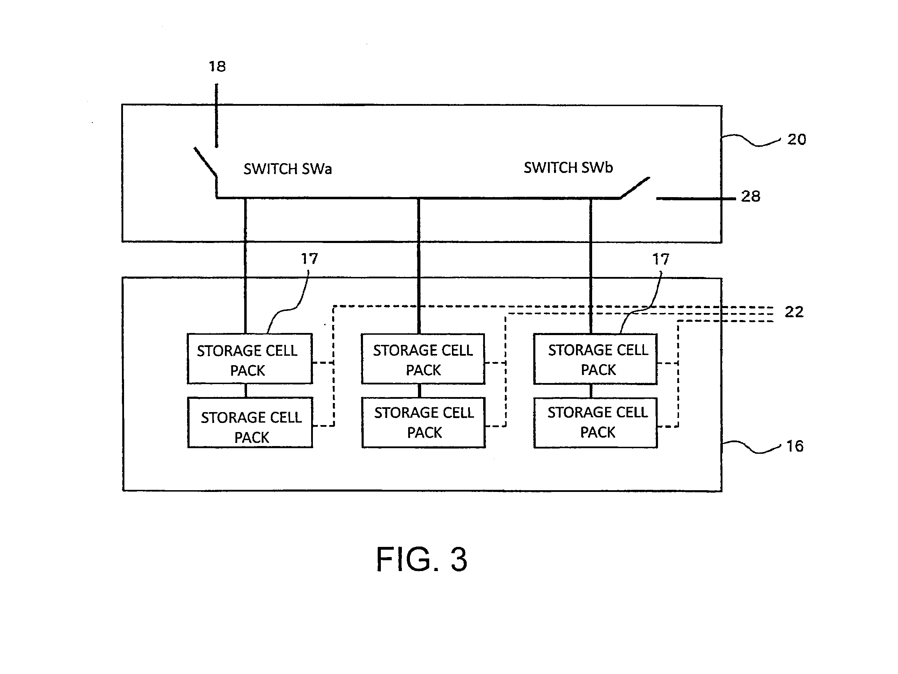

FIG. 3 shows an internal configuration of the electrical storage unit 16 and the power system switching circuit 20. The electrical storage unit 16 is configured to include two or more storage cell packs 17 shown in FIG. 2, which are connected in series and parallel. More specifically, the electrical storage unit 16 is configured to include two or more storage cell packs 17 such that, for example, two storage cell packs 17 are connected in series and sets of the two serially connected storage cell packs 17 are further connected to other in parallel in three columns. The data from the pack information controller 16c of each of the storage cell packs 17, namely, the voltage of unit cells in each stage in which the unit cells are connected in parallel, current and voltage of the storage cell pack, SOC of the storage cell pack, and the temperature of the storage cell pack, is output to the power management unit 22 via a communication line. As described above, the power management unit 22 controls charge and discharge of the electrical storage device 14 based on SOC of each storage cell pack.

### 2. Basic Charge and Discharge Control of System

A basic charge and discharge control of the system having the above configuration is described below.

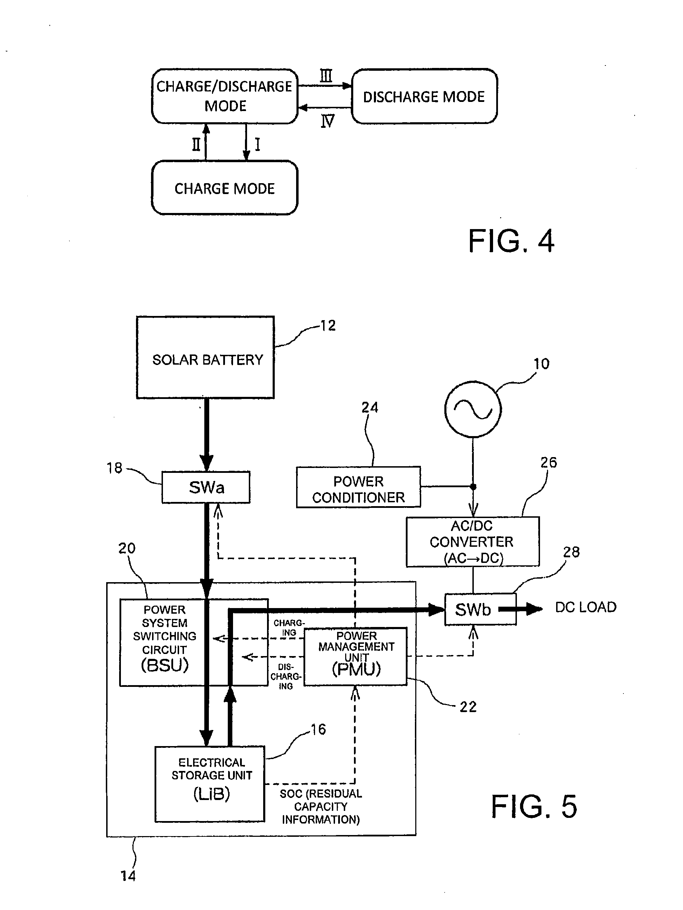

FIG. 4 shows a transition of charge and discharge modes of the electrical storage device 14. The electrical storage device 14 is in a charge/discharge mode as default. The charge/discharge mode means that the electrical power from the solar battery 12 is charged and the stored electrical power is discharged to a load. FIG. 5 shows the charge/discharge mode in the configuration shown in FIG. 1. The contact of the switch SWa 18 is switched to the electrical storage device 14 side and the charge switch and the discharge switch of the power system switching circuit 20 are both turned ON. Further, the contact of the switch SWb 28 is switched to the electrical storage device 14 side. The electrical power generated by the solar battery 12 is supplied to and charged into the electrical storage unit 16 of the electrical storage device 14 via the switch SWa 18 and the power system switching circuit 20. Along with this, the electrical power stored in the electrical storage unit 16 is supplied and discharged to a load via the power system switching circuit 20 and the switch SWb 28. It should be noted that the charge/discharge mode is maintained even when the electric power generation by the solar battery 12 is zero or near to zero, such as when cloudy, rainy, or at night.

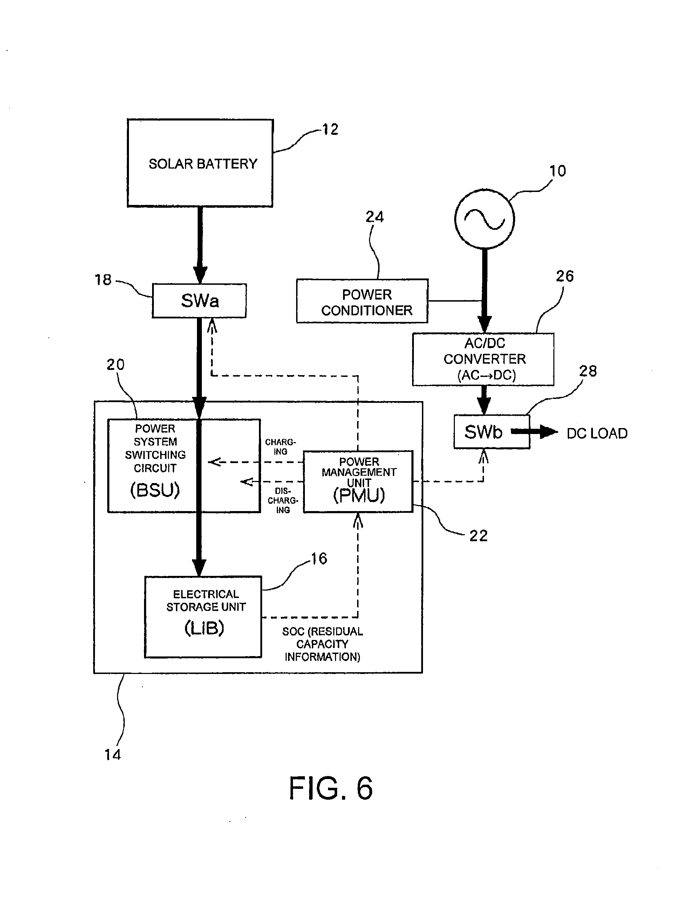

Referring back to FIG. 4, the charge/discharge mode as described above is set as default. When a certain condition is met in this mode, the mode transits to the charge mode. The certain condition is that the SOC of the electrical storage unit 16 drops, indicating that charging is required. For convenience, the transition from the charge/discharge mode to the charge mode is referred to as "Transition I". FIG. 6 shows the charge mode in the configuration shown in FIG. 1. The contact of the switch SWa 18 is switched to the electrical storage device 14 side; the charge switch of the power system switching circuit 20 is turned ON; and the discharge switch is turned OFF. The contact of switch SWb 28 is switched to the AC/DC converter 26 side. The electrical power generated by the solar battery 12 is supplied to and charged into the electrical storage unit 16 of the electrical storage device 14 via the switch SWa 18 and the power system switching circuit 20. Further, AC power from the external commercial power supply 10 is converted to DC power by the AC/DC converter 26 and supplied to the DC load via the switch SWb 28. In other words, when the electrical storage device 14 is in the charge mode, electrical power required for the DC load is supplied from the external commercial power supply 10.

Further, when a certain condition is met in the charge mode, the charge/discharge mode is restored. The certain condition is that the SOC of the electrical storage unit 16 is within a desired range, indicating that discharge is possible. For convenience, the transition from the charge mode to the charge/discharge mode is referred to as "Transition II".

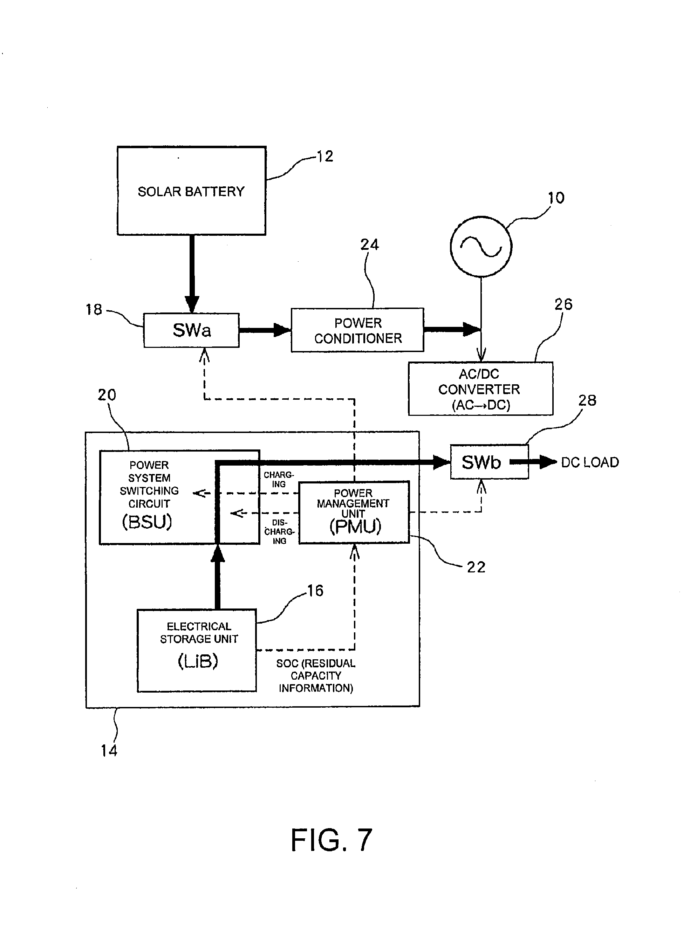

Further, when a certain condition is met in the charge/discharge mode, the mode transits to the discharge mode. The certain condition is that the SOC of the electrical storage unit 16 increases such that no charging is required. For convenience, the transition from the charge/discharge mode to the discharge mode is referred to as "Transition III". FIG. 7 shows the discharge mode in the configuration shown in FIG. 1. The contact of the switch SWa 18 is switched to the power conditioner 24 side; the charge switch of the power system switching circuit 20 is turned OFF; and the discharge switch is turned ON. Further, the contact of the switch SWb 28 is switched to the electrical storage device 14 side. The electrical power stored in the electrical storage unit 16 is supplied and discharged to the load via the power system switching circuit 20 and the switch SWb 28. When there is electrical power generated by the solar battery 12, the electrical power from the solar battery 12 is converted by the power conditioner 24 to AC power and output to an AC system. This electrical power may be sold to an external electric power company, or supplied to an AC load (not shown).

When a certain condition is met in the discharge mode described above, the charge/discharge mode is restored. The certain condition is that the SOC of the electrical storage unit 16 is within a desired range, indicating that charge and discharge is possible. For convenience, the transition from the discharge mode to the charge/discharge mode is referred to as "Transition IV".

As described above, charge and discharge of the electrical storage device 14 is determined depending on the SOC of the electrical storage unit 16. However, as the electrical storage unit 16 is configured to include two or more storage cell packs 17, characteristics dispersion occurs because of individual characteristics of the storage cell packs 17 which become significant as charge and discharge are repeated. Specifically, dispersion occurs in the SOC of each storage cell pack 17. Therefore, the power management unit 22 according to an embodiment of the present invention detects the dispersion of the SOC among the two or more storage cell packs; retrieves the maximum and minimum values; and controls charge and discharge in accordance with the retrieved maximum and minimum values.

Charge and discharge control based on the SOC is described in detail below.

### 3. Charge and Discharge Control Based on SOC

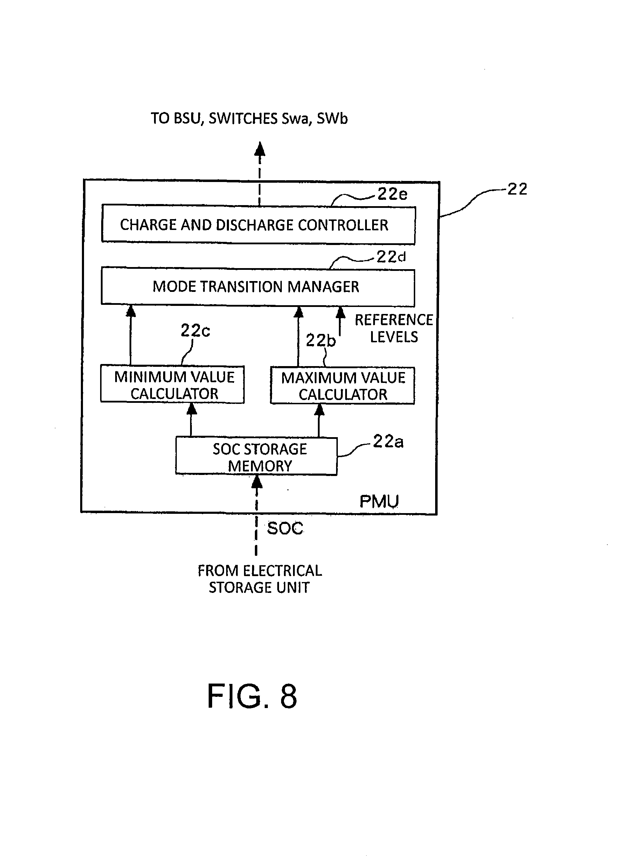

FIG. 8 shows a block diagram of a detailed configuration of the power management unit 22. The power management unit 22 includes a SOC storage memory 22a, a maximum value calculator 22b, a minimum value calculator 22c, a mode transition manager 22d, and a charge and discharge controller 22e.

The SOC storage memory 22a stores SOC for each of the storage cell packs 17 supplied from the pack information controller 16c (refer to FIG. 2) inside the storage cell pack 17. In the case of a total of six storage cell packs 17, two of which are connected in series and the serially connected two storage cell packs 17 being further connected in parallel in three columns in the electrical storage unit 16, a total of six pieces of SOC data are stored in the SOC storage memory 22a. The parameter calculator 16b (refer to FIG. 2) in each storage cell pack 17 periodically calculates SOC of each storage cell pack 17 at a predetermined timing to supply the calculated SOC to the pack information controller 16c. In response to the supplied SOC, the pack information controller 16c periodically supplies the SOCs of the storage cell packs 17 to the power management unit 22. The SOC storage memory 22a sequentially stores the total of six SOCs which are periodically supplied. These pieces of SOC data for each storage cell pack are referred to as "SOC 1", "SOC 2"... and "SOC 6".

The maximum value calculator 22b retrieves the maximum value from the SOC data stored in the SOC storage memory 22a.

The minimum value calculator 22c retrieves the minimum value from the SOC data stored in the SOC storage memory 22a.

The mode transition manager 22d determines which of the charge/discharge mode, charge mode, or discharge mode is to be applied to the electrical storage device 14 based on the retrieved maximum and minimum values. Specifically, the maximum and minimum values are compared with each of reference levels, and the mode to be applied is determined based on the comparison result. The reference level includes the upper limit value of the SOC, the lower limit value of the SOC and mode transition threshold values. It is preferable that the SOC of the electrical storage unit 16 is determined by lowering the depth of discharge in a range of, for example, 40% to 90%, by taking into account battery life of a lithium ion secondary battery. Thus, the lower limit of the SOC is set at 40%, while the upper limit is set at 90%. When the retrieved maximum and minimum values are within the range from 40% to 90%, the charge/discharge mode is applied; when the minimum value is less than 40%, the charge mode is applied to increase the SOC; and when the maximum value is over 90%, the discharge mode is applied to decrease the SOC. However, control becomes unstable as a result of switching among the charge/discharge mode, the charge mode, and the discharge mode by merely setting the upper limit and the lower limit. For example, in a case where the lower limit is set at 40% to apply the charge mode with the minimum value less than 40% and the charge/discharge mode with the minimum value equal to or more than 40%, a situation may occur where the transition to the charge mode is applied when the minimum value is 39%, and then as charging proceeds, the transition to the charge/discharge mode is applied when the minimum value reaches 40%, and the minimum value again becomes less than 40% as a result of the discharge, resulting in the transition to the charge mode. Therefore, a mode transition threshold may be set at, for example, 60% to determine whether or not to apply a mode transition.

Detailed descriptions are provided below.

### <Transition I>

Transition from the charge/discharge mode to the charge mode. When the minimum value becomes less than 40%, this transition is applied.

### <Transition II>

Transition restoring the charge/discharge mode from the charge mode. When the maximum value reaches 60%, discharge is started to transit to the charge/discharge mode.

### <Transition III>

Transition from the charge/discharge mode to the discharge mode. When the maximum value reaches over 90%, this transition is applied.

### <Transition IV>

Transition restoring the charge/discharge mode from the discharge mode. When the minimum value reaches 60%, charge is started to transit to the charge/discharge mode.

The mode transition can be made stable by providing hysteresis characteristics in which the threshold used for the transition from the charge/discharge mode to the charge or discharge mode differs from the threshold used for the transition restoring the charge/discharge mode from the charge or discharge mode. Further, the mode transition can be made stable also by providing hysteresis characteristics by switching between the maximum value and the minimum value as the SOC to be compared with the above two thresholds.

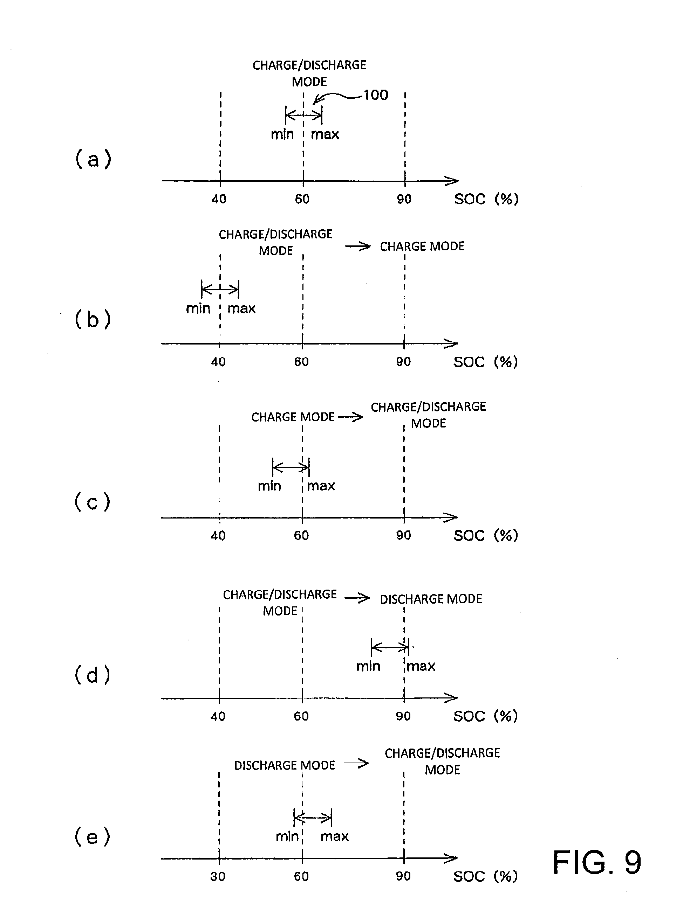

FIG. 9 shows how the mode transition is applied in the present embodiment in time sequence. FIG. 9 (a) shows a default mode which is in the charge/discharge mode with the minimum value (min) and the maximum value (max) of SOC 1 to SOC 6 of the electrical storage unit 16 both being within the range from 40% to less than 90%. It should be noted that in the drawings, the range of the SOC is indicated by the reference numeral 100. Although the range 100 is illustrated as being almost uniform throughout all the drawings in FIG. 9, the range 100 is variable depending on the characteristics of each storage cell pack 17 as charging and discharging are repeated.

When the discharge proceeds from the state shown in FIG. 9 (a) such that the minimum value of the SOC drops to be less than 40% as shown in FIG. 9(b), the charge/discharge mode which is the default mode transits to the charge mode. It should be noted here that the mode still transits to the charge mode when the minimum value is less than 40%, even if the maximum value (max) is over 40%. In this way, overdischarge of the storage cell pack 17 which shows the minimum value (min) can be prevented.

When the charge proceeds from the state shown in FIG. 9(b) such that the maximum value of the SOC reaches 60%, discharge is started to restore the charge/discharge mode from the charge mode. It should be noted that the discharge does not start when the minimum value (min) reaches 40%.

Further, when the charge proceeds from the state shown in FIG. 9 (c) or FIG. 9 (a) such that the maximum value of the SOC reaches 90% or more as shown in FIG. 9(d), the mode transits from the charge/discharge mode to the discharge mode. It should be noted here that the mode still transits to the discharge mode when the maximum value (max) is 90% or more, even if the minimum value (min) is 90% or less. In this way, overcharge of the storage cell pack 17 which shows the maximum value (max) can be prevented.

When the discharge proceeds from the state shown in FIG. 9(d) such that the minimum value (min) drops to 60%, charge is started to restore the charge/discharge mode from the discharge mode. It should be noted that the charge does not start when the maximum value (max) reaches 90%.

Further, the above transitions are merely examples, and other transitions are possible. For example, the transition may be as follows:

### <Transition I>

Transition from the charge/discharge mode to the charge mode. When the minimum value becomes less than 40%, this transition is applied.

### <Transition II>

Transition restoring the charge/discharge mode from the charge mode. When the minimum value drops to 60%, discharge is started to transit to the charge/discharge mode.

### <Transition III>

Transition from the charge/discharge mode to the discharge mode. When the maximum value reaches over 90%, this transition is applied.

### <Transition IV>

Transition restoring the charge/discharge mode from the discharge mode. When the maximum value reaches 60%, charge is started to transit to the charge/discharge mode.

The reference levels (upper limit value, lower limit value, mode transition threshold) may be stored in an internal memory of the mode transition manager 22d in advance or supplied by reading out from the memory in the power management unit 22. The reference levels do not need to be fixed. The reference levels may be adjustable by a user depending on environment of plant facilities and operation status. The mode transition manager 22d determines the mode to be applied as described above and outputs the determined mode to the charge and discharge controller 22e.

The charge and discharge controller 22e controls charge and discharge by outputting a charge or discharge instruction to the power system switching circuit 20, the switch SWa 18, and the switch SWb 28 in accordance with the determined mode.

Thus, overdischarge and overcharge of the electrical storage unit 16 can be reliably prevented by taking into account the SOC dispersion within each of the storage cell packs of the electrical storage unit 16 to determine a charge and discharge mode to be applied by using the maximum value and the minimum value of the SOC.

### 4. Charge and Discharge Control Based on SOC in Case of Power Failure

As described above, electrical power is supplied to a DC load from the electrical storage device 14 or the external commercial power supply 10. In the case of power failure of the external commercial power supply 10, electrical power should be supplemented from the electrical storage device 14. Therefore, although charge and discharged is controlled so as to maintain the SOC of the electrical storage unit 16 within a range from 40% to 90% in a normal state, it becomes preferable in the case of power failure to temporarily change this control range. For example, the lower limit value of the SOC may be lowered from 40% to 10%. Along with this change in the lower limit value, it is also preferable to change the mode transition threshold at the same time.

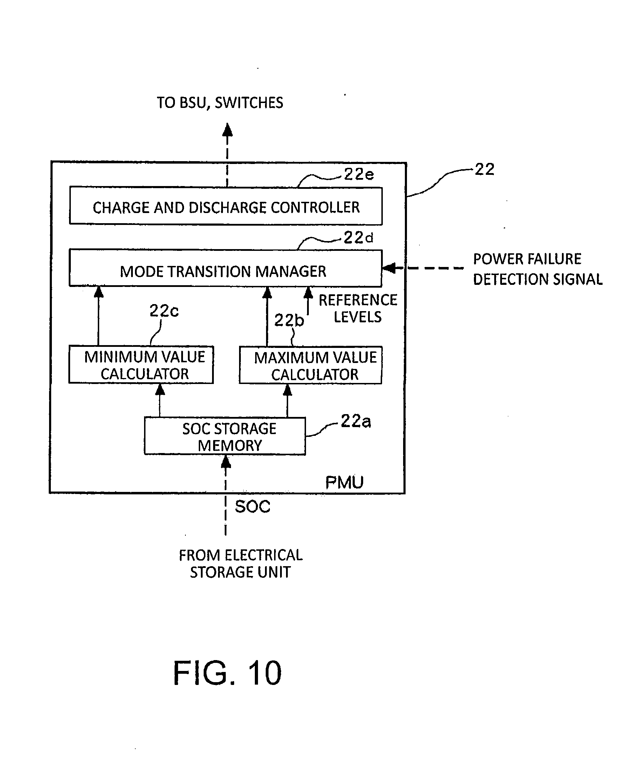

FIG. 10 shows a block diagram of a detailed configuration of the power management unit 22 in this case. The basic configuration is identical to the configuration shown in FIG. 8 except that a power failure detection signal is supplied to the mode transition manager 22d from a device which monitors the state of the external commercial power supply 10 and the mode transition manager 22d determines the mode to be applied by temporarily changing the reference levels in response to the power failure detection signal. Among the reference levels including an upper limit value, lower limit value, and mode transition threshold, the mode transition manager 22d lowers each of the lower limit value and the mode transition threshold. For example, the lower limit value is lowered from 40% to 10%, while the mode transition threshold is lowered from 60% to 30%.

Consequently, the transition modes become as follows.

### <Transition I>

Transition from the charge/discharge mode to the charge mode. When the minimum value becomes less than 10%, this transition is applied.

### <Transition II>

Transition restoring the charge/discharge mode from the charge mode. When the maximum value reaches 30%, discharge is started to transit to the charge/discharge mode.

### <Transition III>

Transition from the charge/discharge mode to the discharge mode. When the maximum value reaches over 90%, this transition is applied.

### <Transition IV>

Transition restoring the charge/discharge mode from the discharge mode. When the minimum value drops to be 60%, charge is started to transit to the charge/discharge mode.

It should be noted that 40% is changed to 10% in Transition I, while 60% is changed to 30% in Transition II.

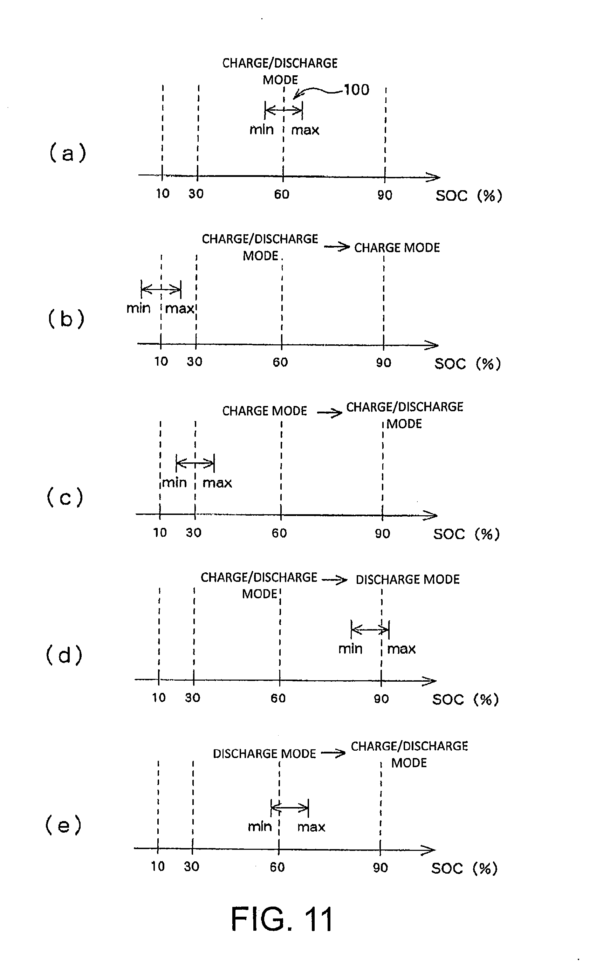

FIG. 11 shows how the mode transition is applied in the case of power failure in time sequence. When the discharge proceeds from the charge/discharge mode shown in FIG. 11 (a) such that the minimum value (min) of the SOC drops to be less than 10%, as shown in FIG. 11 (b), the charge/discharge mode which is the default mode transits to the charge mode. Although the mode transits to the charge/discharge mode with the minimum value less than 40% in a normal state (that is, in the case of no power failure), the mode transits to the charge mode when the discharge further proceeds and the minimum value drops to be less than 10%. Therefore, the charge/discharge mode is maintained even when the minimum value (min) of the SOC drops to be less than 40% as long as the minimum value is 10% or more. Thus, electrical power can continue to be supplied to the DC load by the discharge.

When the charge proceeds from the state shown in FIG. 11 (b) such that the maximum value (max) of the SOC reaches 30%, as shown in FIG. 11 (c), discharge is started to restore the charge/discharge mode from the charge mode. Although the mode transits to the charge/discharge mode with the maximum value reaching 60% in a normal state, the mode transits to the charge/discharge mode when the maximum value reaches 30%, making it possible to start supplying electrical power to the DC load by the discharge at an earlier time. Although it is possible that the SOC is lowered by the discharge with the mode transiting to the charge/discharge mode at this earlier time, because the charge/discharge mode is maintained until the minimum value (min) drops to be less than 10%, the electrical power can continue to be supplied to the DC load as a result. Therefore, the DC load can be stably driven in the event of power failure.

When the charge proceeds from the state shown in FIG. 11 (c) or in FIG. 11(a) such that the maximum value of the SOC reaches over 90%, as shown in FIG. 11(d), the mode transits from the charge/discharge mode to the discharge mode.

When the discharge proceeds from the state shown in FIG. 11(d) such that the minimum value (min) of the SOC drops to 60%, charging is started to restore the charge/discharge mode from the discharge mode.

Alternatively, other transitions may be possible, for example:

### <Transition I>

Transition from the charge/discharge mode to the charge mode. When the minimum value becomes less than 10%, this transition is applied.

### <Transition II>

Transition restoring the charge/discharge mode from the charge mode. When the minimum value drops to be less than 30%, discharge is started to transit to the charge/discharge mode.

### <Transition III>

Transition from the charge/discharge mode to the discharge mode. When the maximum value reaches over 90%, this transition is applied.

### <Transition IV>

Transition restoring the charge/discharge mode from the discharge mode. When the maximum value drops to 60%, charge is started to transit to the charge/discharge mode.

Thus, by setting the lower limit value of the transition from the charge/discharge mode to the charge mode to 10%, the charge/discharge mode can be continued longer than in case of 40%. This enables a longer supply of electrical power to the DC load from the electrical storage device 14 in the case of power failure. Although the work load of the lithium ion secondary battery is increased by setting the lower limit value of transition to 10%, any negative effect on battery life can be assumed to be small in consideration of the occurrence frequency of power failure.

In summary, the charge and discharge control based on the SOC in the case of power failure is as follows.

A power management system controlling charge and discharge of an electrical storage unit which is charged by electrical power from a power source and discharges the stored electrical power to a load, the power management system comprising: a detection unit which detects charge information of each of a plurality of storage cell packs included in the electrical storage unit; and a control unit which controls in accordance with the detected charge information such that when the detected charge information is between a predetermined lower limit value and an upper limit value, the electrical storage unit is caused to be in a charge/discharge mode in which charging and discharging are both possible, when the detected charge information is less than the lower limit value, the electrical storage unit is caused to transit from the charge/discharge mode to a charge mode in which only charging is possible, and when the detected charge information is over the upper limit value, the electrical storage unit is caused to transit from the charge/discharge mode to a discharge mode in which only discharging is possible, wherein the control unit retrieves a minimum value andamaximum value of the detected charge information of each of the plurality of storage cell packs, and when the retrieved minimum value is less than the lower limit value, the control unit causes the electrical storage unit to transit from the charge/discharge mode to the charge mode, while when the retrieved maximum value is over the upper limit value, the control unit causes the electrical storage unit to transit from the charge/discharge mode to the discharge mode, and the control unit lowers the lower limit value when a power failure is detected in an external commercial power supply included in the power source.

A power management system controlling charge and discharge of an electrical storage unit which is charged by electrical power from a power source and discharges the stored electrical power to a load, the power management system comprising: a detection unit which detects charge information of each of a plurality of storage cell packs included in the electrical storage unit; and a control unit which controls in accordance with the detected charge information such that when the detected charge information is between a predetermined lower limit value and an upper limit value, the electrical storage unit is caused to be in a charge/discharge mode in which charging and discharging are both possible, when the detected charge information is less than the lower limit value, the electrical storage unit is caused to transit from the charge/discharge mode to a charge mode in which only charging is possible, and when the detected charge information is over the upper limit value, the electrical storage unit is caused to transit from the charge/discharge mode to a discharge mode in which only discharging is possible, wherein the control unit retrieves a minimum value and a maximum value of the detected charge information of each of the plurality of storage cell packs, and when the retrieved minimum value is less than the lower limit value, the control unit causes the electrical storage unit to transit from the charge/discharge mode to the charge mode, while when the retrieved maximum value is over the upper limit value, the control unit causes the electrical storage unit to transit from the charge/discharge mode to the discharge mode, and wherein when the detected charge information reaches a first threshold which is higher than the lower limit value, the control unit further causes the electrical storage unit to transit from the charge mode to the charge/discharge mode, while when the detected charge information drops to a second threshold which is lower than the upper limit value, the control unit causes the electrical storage unit to transit from the discharge mode to the charge/discharge mode, and the control unit lowers the lower limit value when a power failure is detected in an external commercial power supply included in the power source.

### 5. Modification Examples

Although embodiments according to the present invention are described above, the present invention is not limited to these embodiments and various modifications are possible.

For example, although in an example in FIGs. 8 and 9, an upper limit value, a lower limit value, and a mode transition threshold are listed as examples of reference levels to be used to determine a charge and/or discharge mode, two values, namely a threshold for Transition II (first threshold) and a threshold for Transition IV (second threshold), may be used as the mode transition thresholds. For example, the mode transition threshold may be set not as a single value of 60%, but as 50% as the threshold for Transition II and 70% as the threshold for Transition IV. In other words, the mode transition thresholds may be set to satisfy (threshold for Transition II) > (lower limit value) and (threshold for Transition IV) > (upper limit value).

Further, in examples in FIGs. 10 and 11, the threshold for Transition II = 30%, and the threshold for Transition IV = 60%. In this example, the threshold for Transition II is lowered from 60% to 30% as the lower limit value is lowered from 40% to 10%, but as the upper limit value is unchanged at 90%, the threshold for Transition IV is maintained at 60%. However, it is possible to also raise the upper limit from 90% to, for example, 95%, along with the threshold for Transition IV being raised from 60% to, for example, 80%. Alternatively, although the threshold for Transition II is lowered from 60% to 30% as the lower limit value is lowered from 40% to 10%, the threshold for Transition II may be unchanged at 60%.

Further, in the embodiments according to the present invention, the solar battery (solar power generation power supply system) 12 is described as an example. Besides the solar battery, natural energy or renewable energy such as thermoelectric system using solar energy, wind power generation, wave power generation, or the like may be used.

Further although in the embodiments according to the present invention, a relative charge range SOC (%) which is 100% at a full charge is used as a charge information for each of the storage cell packs 17 included in the electrical storage unit 16, a remaining capacity value in ampere-hours (Ah) may be used instead of the state of charge SOC (%).

### 6. Charge and Discharge Control Based on Time Information

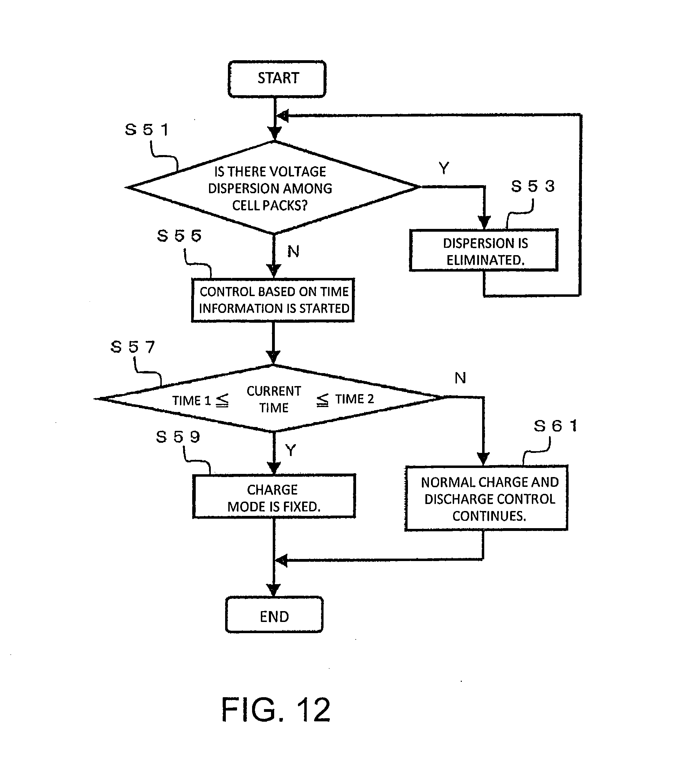

Described below is a method for performing charge and discharge control based on time information in addition to the above described charge and discharge control based on SOC. FIG. 12 shows a flow chart for performing the charge and discharge control based on SOC and time information. The power management unit 22 performs the charge and discharge control based on time information described below.

In step S51, it is determined whether voltage dispersion exists among the storage cell packs 17. Among the storage cell packs 17, characteristics dispersion may occur because individual characteristics become significant as charge and discharge cycles are repeated. If the charge or discharge mode is forced to be applied with such dispersion, there is a risk that a certain storage cell pack 17 may be overcharged or overdischarged.

Thus, when the dispersion is determined to exist in step S51, the process moves to step S53 to perform control so as to eliminate the voltage dispersion among the storage cell packs 17. For example, the voltage dispersion among the storage cell packs 17 is eliminated by turning OFF the discharge switch and the charge switch shown in FIG. 3. By turning OFF the discharge switch and the charge switch, electric current flows from a storage cell pack 17 with higher voltage to a storage cell pack 17 with a lower voltage, resulting in reduction of the voltage dispersion. Such dispersion elimination control continues until it is determined that no dispersion exists in step S51. The determination of the dispersion among the storage cell packs 17 is performed by obtaining the voltage of each storage cell pack 17 and determining that the dispersion exists when the difference between the maximum value and the minimum value of the obtained voltage is larger than a predetermined threshold.

If it is determined that no voltage dispersion of the storage battery pack 17 exists in step S51, the process moves to step S55 to start control by using time information.

Time 1 and Time 2 are stored in the power management unit 22 in advance. In step S57, it is determined that the current time is within the period defined by Time 1 and Time 2.

If the current time is determined to be within the predetermined period in step S57, the process moves to the step S59. In step S59, control is performed to forcibly apply the charge mode regardless of the SOC of the electrical storage unit 16. It is preferable that the charge in step S57 is performed only by the solar battery 12 when the solar battery 12 can generate electrical power in the period defined by Time 1 and Time 2.

If the current time is not within the predetermined period in step S57, the process moves to the step S61. In step S61, the charge and discharge control by using the current time is not performed but the charge and discharge control based on the SOC (normal charge and discharge control) is continued.

By repeating the control in steps S51 to S61, it becomes possible to forcibly apply the charge mode in the period defined by Time 1 and Time 2, regardless of the SOC of the electrical storage unit 16, while the normal charge and discharge control based on the SOC is performed in other periods.

By performing the charge and discharge control described in FIG. 12, electrical power generated by the solar battery 12 can be effectively stored in the electrical storage unit 16. For example, if Time 1 and Time 2 are set to include a period in which the power generation by the solar battery 12 is the highest in a day, the electrical storage unit 16 can be charged with high electrical power in a short period.

Further, if Time 1 and Time 2 are set to include a period in which the power consumption by the DC load is the lowest in a day, the electrical power charged from the solar battery 12 to the electrical storage unit 16 can be usedwhen the power consumption is high. In this way, it becomes possible to restrict variation in power consumption of the external commercial power supply 10, resulting in a lower power consumption of external commercial power supply 10 at peak time.

In the charge and discharge control based on the flowchart in FIG. 12, control using a single pair of Time 1 and Time 2 is described. However, control using two or more pairs of Time 1 and Time 2 may also be possible. Similarly, although the charge in the period between Time 1 to Time 2 is described as the power generation by the solar battery 12, other natural energy or renewable energy may be used. In that case, Time 1 and Time 2 are preferably appropriately set for each energy source.

### [REFERENCE NUMERALS]

10 external commercial power supply, 12 solar battery (solar power generation system), 14 electrical storage device, 16 electrical storage unit, 17 storage cell pack, 18 switch SWa (first selector switch), 20 power system switching circuit, 22 power management unit, 24 power conditioner, 26 AC/DC converter, 28 switch SWb (second selector switch)

## Claims

1. A power management system controlling charge and discharge of an electrical storage unit which is charged by electrical power from a power source and discharges the stored electrical power to a load, the power management system comprising:
a detection unit which detects charge information of each of a plurality of storage cell packs included in the electrical storage unit; and
a control unit which perform control in accordance with the detected charge information such that
when the detected charge information is between a predetermined lower limit value and an upper limit value, the electrical storage unit is caused to be in a charge/discharge mode in which charging and discharging are both possible,
when the detected charge information is less than the lower limit value, the electrical storage unit is caused to transit from the charge/discharge mode to a charge mode in which only charging is possible, and
when the detected charge information is over the upper limit value, the electrical storage unit is caused to transit from the charge/discharge mode to a discharge mode in which only discharging is possible.

2. The power management system according to claim 1,
wherein the control unit retrieves a minimum value and a maximum value of the detected charge information of each of the plurality of storage cell packs, and
when the retrieved minimum value is less than the lower limit value, the control unit causes the electrical storage unit to transit from the charge/discharge mode to the charge mode,
while when the retrieved maximum value is over the upper limit value, the control unit causes the electrical storage unit to transit from the charge/discharge mode to the discharge mode.

3. The power management system according to claim 2,
wherein when the detected charge information reaches a first threshold which is higher than the lower limit value, the control unit further causes the electrical storage unit to transit from the charge mode to the charge/discharge mode,
while when the detected charge information drops to a second threshold which is lower than the upper limit value, the control unit causes the electrical storage unit to transit from the discharge mode to the charge/discharge mode.

4. The power management system according to claim 3,
wherein when the maximum limit value reaches the first threshold, the control unit causes the electrical storage unit to transit from the charge mode to the charge/discharge mode,
while when the minimum value drops to the second threshold, the control unit causes the electrical storage unit to transit from the discharge mode to the charge/discharge mode.

5. The power management system according to claim 3,
wherein when the minimum value reaches the first threshold, the control unit causes the electrical storage unit to transit from the charge mode to the charge/discharge mode,
while when the maximum value drops to the second threshold, the control unit causes the electrical storage unit to transit from the discharge mode to the charge/discharge mode.

6. The power management system according to any one of claims 1 to 5, wherein the control unit further comprises:
a power system switch unit including a charge switch connecting between the power source and the electrical storage unit and a discharge switch connecting between the electrical storage unit and the load;
a power management unit which controls switching of the charge switch and the discharge switch in accordance with the detected charge information such that the electrical storage unit is controlled to be
in the charge/discharge mode by turning ON both of the charge switch and the discharge switch,
in the charge mode by turning ON only the charge switch, or
in the discharge mode by turning ON only the discharge switch.

7. The power management system according to claim 6,
wherein the power source includes an external commercial power supply and a solar power generation system;
the solar power generation system and the electrical storage unit are connected via the charge switch anda first selector switch;
the external commercial power supply and the electrical storage unit are connected to the load via a second selector switch;
in the charge/discharge mode, the power management unit performs control to enable charging by turning ON the charge switch and switching the first selector switch to the electrical storage unit side, and further enables discharging by turning ON the discharge switch and switching the second switch to the electrical storage unit side,
in the charge mode, the power management unit performs control to enable charging by turning ON the charge switch and switching the first selector switch to the electrical storage unit side and further by turning OFF the discharge switch and switching the second selector switch to the external commercial power supply side, and
in the discharge mode, the power management unit performs control to enable discharging by turning OFF the charge switch and switching the first selector switch to the external commercial power supply side and further by turning ON the discharge switch and switching the second selector switch to the electrical storage unit side.

8. The power management system according to claim 1,
wherein the control unit causes the electrical storage unit to be in the charge mode regardless of the charge information of the electrical storage unit when a current time is within a predetermined period.

9. A power management system controlling charge and discharge of an electrical storage unit which is charged by electrical power from a power source and discharges the stored electrical power to a load, the power management system comprising:
a detection unit which detects charge information of each of a plurality of storage cell packs included in the electrical storage unit; and
a control unit which controls the electrical storage unit to be in a charge/discharge mode in which charging and discharging are both possible, a charge mode in which only charging is possible, or a discharge mode in which only discharging is possible, and
wherein the control unit selects the charge/discharge mode, the charge mode, or the discharge mode in accordance with the charge information detected by the detection unit, and
when a current time is within a predetermined period, the control unit causes the electrical storage unit to be in the charge mode regardless of the charge information of the electrical storage unit.

10. The power management system according to claim 9,
wherein the power source includes an external commercial power supply and a solar power generation system, and
in the charge mode with the current time being within the predetermined period, electrical power generated by the solar power generation system is charged to the electrical storage unit.
